# EUROPÄISCHE PATENTSCHRIFT

(11) **EP 2 957 915 B1**
(45) Veröffentlichungstag und Bekanntmachung des Hinweises auf die Patenterteilung: **19.01.2022**
(21) Anmeldenummer: 15172095.0
(22) Anmeldetag: 15.06.2015
(51) Int. Cl.: G01N 35/00, G01N 35/10, B01L 9/00

(54) **PIPETTIERVORRICHTUNG MIT MODULAREM PIPETTIERKOPF**
PIPETTING DEVICE WITH MODULAR PIPETTING HEAD
DISPOSITIF DE PIPETAGE AYANT UNE TETE DE PIPETAGE MODULAIRE

(30) Priorität: 20.06.2014 DE 102014108688
(43) Veröffentlichungstag der Anmeldung: 23.12.2015
(73) Patentinhaber: Hamilton Bonaduz AG, 7402 Bonaduz (CH)
(72) Erfinder: Breitenmoser, Sabina, 7402 Bonaduz (CH); Bruggisser, Elia, 7000 Chur (CH); Nawrocki, Eduard, 7402 Bonaduz (CH); Sievi, Rico, 7402 Bonaduz (CH)
(74) Vertreter: Müller Hoffmann & Partner

(56) Entgegenhaltungen:
- EP-A1- 2 261 676
- WO-A1-00/62933
- US-A1- 2013 065 797

## Beschreibung

Die Erfindung betrifft eine Pipettiervorrichtung, insbesondere Pipettierroboter, gemäß Anspruch 4, umfassend: eine Positioniervorrichtung, die einen in einer ersten Hauptrichtung (X) beweglichen Hauptrahmen umfasst, wobei die Pipettiervorrichtung entlang des Hauptrahmens in einer zweiten Hauptrichtung (Y) beweglich ist; wenigstens einen Basisträger und wenigstens einen Pipettierkopfträger, wobei der Basisträger und der Pipettierkopfträger derart miteinander verbunden sind, dass sie in einem an der Positioniervorrichtung angebrachten Zustand in der ersten und der zweiten Hauptrichtung (X, Y) gemeinsam beweglich sind und relativ zueinander in einer dritten Hauptrichtung (Z), die orthogonal zu den beiden anderen Hauptrichtungen ist, beweglich sind; und
wenigstens einen Pipettierkopf gemäß einem der Ansprüche 1-3, wobei wenigstens das mechanische Kopplungsmittel und das wenigstens eine elektrische Kopplungsmittel des Pipettierkopfs mit einem jeweiligen mechanischen bzw. elektrischen Gegenkopplungsmittel verbindbar sind, wobei das jeweilige Gegenkopplungsmittel am Pipettierkopfträger ausgebildet ist; wobei das wenigstens eine mechanische Kopplungsmittel und das jeweils zugehörige Gegenkopplungsmittel derart ausgebildet sind, dass der Pipettierkopf lösbar und spielfrei am Pipettierkopfträger koppelbar ist, wobei die Dichtungsbetätigungseinrichtung des Pipettierkopfs und ein die Dichtungsbetätigungseinrichtung antreibendes Antriebsmittel betriebsmäßig derart zusammenwirken, dass die fluiddichte Verbindung zwischen einer Pipettierspitze und dem Pipettierkanal hergestellt oder/und nach Gebrauch der Pipettiespitze gelöst werden kann, wobei das Antriebsmittel am Pipettierkopfträger angeordnet ist.

Aus der EP 2 261 676 A1 ist ein Werkzeug zur Handhabung einer Probe bekannt, das bei einem Autosampler eingesetzt wird. An dem Werkzeug ist eine Probenmanipuliervorrichtung in Form einer Spritze vorgesehen.

Aus der US 2013/0065797 A1 ist eine Prozessierstation zum automatischen Verarbeiten von biologischen Proben bekannt.

Der Aufbau und die Verbindungen zwischen Basisträger, Pipettierkopfträger und Pipettierkopf sind bei bekannten Pipettiervorrichtungen eher komplex. Diese Komplexität im Aufbau ist zum einen bei der Herstellung, aber insbesondere bei der Wartung und beim Austausch von fehlerhaften oder verschlissenen Bauteilen nachteilig. Häufig bilden der Pipettierkopf und der Pipettierkopfträger eine Baueinheit, die insbesondere eine gemeinsame tragende Struktur oder/und ein gemeinsames Gehäuse aufweisen. Durch Fehler, die beim Verarbeiten von Proben mittels einer Pipettiervorichtung auftreten können, sind insbesondere die Pipettierköpfe und die daran angeordneten Pipettierkanäle betroffen, etwa durch mechanische Probleme aufgrund eines zu starken Absenkens in Richtung von Probenbehältern oder durch fehlerhaftes Aspirieren von Probenflüssigkeit, was zu einer unerwünschten Kontamination des Pipettierkanals führen kann. Ferner sind an den Pipettierköpfen und den Pipettierkopfträgern auch eine Vielzahl elektronischer Bauteile, wie Sensoren, Prozessoren und Speicherelemente angeordnet und miteinander verbunden, etwa auf einer gemeinsamen Leiterplatte, so dass beim Austausch eines Pipettierkopfs regelmäßig auch dessen Pipettierkopfträger ausgetauscht werden muss.

Aufgabe der Erfindung ist es, eine Pipettiervorrichtung bereitzustellen, mit der diese Nachteile gemindert oder verhindert werden können.

Diese Aufgabe wird durch eine Pipettiervorrichtung und einen Pipettierkopf gemäß den unabhängigen Ansprüchen gelöst. Weitere Merkmale zur Ausgestaltung der Pipettiervorrichtung bzw. des Pipettierkopfs sind in den Unteransprüchen enthalten.

Eine Pipettiervorrichtung, insbesondere Pipettierroboter, gemäß Anspruch 4 umfasst:
eine Positioniervorrichtung, die einen in einer ersten Hauptrichtung (X) beweglichen Hauptrahmen umfasst, wobei die Pipettiervorrichtung entlang des Hauptrahmens in einer zweiten Hauptrichtung (Y) beweglich ist;
wenigstens einen Basisträger und wenigstens einen Pipettierkopfträger, wobei der Basisträger und der Pipettierkopfträger derart miteinander verbunden sind, dass sie in einem an der Positioniervorrichtung angebrachten Zustand in der ersten und der zweiten Hauptrichtung (X, Y) gemeinsam beweglich sind und relativ zueinander in einer dritten Hauptrichtung (Z), die orthogonal zu den beiden anderen Hauptrichtungen ist, beweglich sind;
wenigstens einen Pipettierkopf gemäß einem der Ansprüche 1-3, wobei wenigstens das mechanische Kopplungsmittel und das wenigstens eine elektrische Kopplungsmittel des Pipettierkopfs mit einem jeweiligen mechanischen bzw. elektrischen Gegenkopplungsmittel verbindbar sind, wobei das jeweilige Gegenkopplungsmittel am Pipettierkopfträger ausgebildet ist; wobei das wenigstens eine mechanische Kopplungsmittel und das jeweils zugehörige Gegenkopplungsmittel derart ausgebildet sind, dass der Pipettierkopf lösbar und spielfrei am Pipettierkopfträger koppelbar ist, wobei die Dichtungsbetätigungseinrichtung des Pipettierkopfs und ein die Dichtungsbetätigungseinrichtung antreibendes Antriebsmittel betriebsmäßig derart zusammenwirken, dass die fluiddichte Verbindung zwischen einer Pipettierspitze und dem Pipettierkanal hergestellt oder/und nach Gebrauch der Pipettiespitze gelöst werden kann, wobei das Antriebsmittel am Pipettierkopfträger angeordnet ist.

Das Vorsehen von Kopplungsmitteln am Pipettierkopf und von Gegenkopplungsmitteln am Pipettierkopfträger ermöglichen eine einfache Verbindung und ein einfaches Lösen von Pipettierkopf und Pipettierkopfträger. Der Pipettierkopf kann daher mit wenigen Handgriffen ausgewechselt werden, wenn beispielsweise Probleme am Pipettierkanal auftreten.

Erfindungsgemäß umfasst die Pipettiervorrichtung eine Dichtungsbetätigungseinrichtung und ein die Dichtungsbetätigungseinrichtung antreibendes Antriebsmittel, die beide betriebsmäßig derart zusammenwirken, dass eine fluiddichte Verbindung zwischen einer Pipettierspitze und dem Pipettierkanal hergestellt oder/und nach Gebrauch der Pipettiespitze gelöst werden kann, wobei die Dichtungsbetätigungseinrichtung am Pipettierkopf und das Antriebsmittel am Pipettierkopfträger angeordnet sind.

Hierzu kann die Pipettiervorrichtung ein hebelartiges Verbindungselement umfassen, wobei die Dichtungsbetätigungseinrichtung mit dem Antriebsmittel durch das Verbindungselement lösbar in Kraftwirkungsverbindung gebracht werden kann oder steht.

Die im Bereich des Pipettierkanals angeordnete Dichtungsbetätigungseinrichtung kann etwa so aufgebaut sein, wie dies in der WO 2000/062933 A1 von der Anmelderin beschrieben worden ist. Gemäß dieser Druckschrift kann die Dichtungsbetätigungseinrichtung eine sogenannte Quetschhülse umfassen, die in axialer Richtung entlang des Pipettierkanals beweglich ist, um in axialer Richtung Druck auf eine als O-Ring ausgeführte Dichtung zwischen Pipettierspitze und Pipettierkanal auszuüben. Dabei ist das an der Dichtung anliegende axiale Ende der Quetschhülse so ausgebildet, dass nicht nur eine axiale Kompression der Dichtung erfolgt, sondern auch in radialer Richtung nach außen gedrückt wird. Das zuvor als Teil der Pipettiervorrichtung und der Dichtungsbetätigungseinrichtung erwähnte hebelartige Verbindungselement ist bevorzugt derart ausgestaltet, dass es durch eine Kippbewegung um eine zur Längsachse des Pipettierkanals orthogonale Kippachse eine axiale Bewegung der aus der genannten Druckschrift bekannten Quetschhülse hervorruft.

Für die vorliegende Pipettiervorrichtung ist es bevorzugt, dass das hebelartige Verbindungselement und das wenigstens eine mechanische Kopplungsmittel derart ausgebildet sind, dass die Verbindung zwischen der Dichtungsbetätigungseinrichtung und dem Antriebsmittel durch das hebelartigen Verbindungselement und die Verbindung des wenigstens einen Kopplungsmittels mit dem zugehörigen Gegenkopplungsmittel dadurch herstellbar ist, dass der Pipettierkopf mit dem Pipettierkopfträger gekoppelt wird.

Entsprechend können die mechanischen Kopplungsmittel und Gegenkopplungsmittel sowie die Dichtungsbetätigungseinrichtung und ihr Antriebsmittel während eines gemeinsamen Handhabungsschrittes gekoppelt oder gelöst werden, wenn der Pipettierkopf am Pipettierkopfträger angebracht oder von diesem Abgenommen wird.

Der Pipettierkopfträger kann eine Trägerplatte umfassen, die das wenigstens eine Gegenkopplungsmittel aufweist, wobei vorzugsweise die Trägerplatte in einem montierten Zustand des Pipettierkopfträgers an der Positioniervorrichtung im Wesentlichen parallel zu einer von der ersten und dritten Hauptrichtung (X, Z) aufgespannten Ebene ist.

Dabei ist es bevorzugt, dass das wenigstens eine Gegenkopplungsmittel als Ausnehmung in der Trägerplatte ausgebildet ist, vorzugsweise als U-förmige Ausnehmung.

Das wenigstens eine mechanische Kopplungsmittel kann als Vorsprung ausgebildet sein, vorzugsweise als zylindrischer Vorsprung.

Damit eine optimale Kopplung ermöglicht werden kann, können die Ausnehmung und der Vorsprung derart ausgebildet sein, dass in wenigstens einer Hauptrichtung (X, Z) eine formschlüssige Verbindung zwischen dem Pipettierkopf und dem Pipettierkopfträger herstellbar ist.

Das Zusammenspiel von mechanischem Kopplungsmittel und Gegenkopplungsmittel ermöglicht ein sicheres und fehlerfreies Zusammenfügen bzw. Lösen von Pipettierkopf und Pipettierkopfträger. Das wenigstens eine Kopplungsstück und das jeweilige Gegenkopplungsstück sind dabei so aufeinander abgestimmt, dass der normalerweise als eigenständige Einheit bzw. eigenständiges (auswechselbares) Modul zu befestigende Pipettierkopf mittels einer einfachen Handhabung in formschlüssige Verbindung mit dem Pipettierkopfträger gebracht werden kann.

Um ein genaue Positionierung des Pipettierkopfs am Pipettierkopfträger zu ermöglichen ist es ferner bevorzugt, dass am Pipettierkopf wenigstens ein Anschlagselement vorgesehen ist, das im montiertem Zustand des Pipettierkopfs an dem Pipettierkopfträger an der Trägerplatte anliegt. Ein solches Anschlagselement bzw. eine Kombination von mehreren Anschlagselementen dient dann insbesondere dazu die relative Bewegung zwischen Pipettierkopf und Pipettierkopfträger in einer oder mehreren Hauptrichtungen einzuschränken.

Um ein Veränderen der Position des Pipettierkopfs am Pipettierkopfträger insbesondere während des Betriebs der Pipettiervorrichtung zu verhindern kann die Pipettiervorrichtung ferner Arretiermittel umfassen, die dazu eingerichtet sind, die mechanische Verbindung zwischen dem wenigstens einen mechanischen Kopplungsmittel und dem zugehörigen Gegenkopplungsmittel zu sichern, wobei vorzugsweise die Arretiermittel als Festellschrauben ausgebildet sind. Solche Feststellschrauben können insbesondere in einer Richtung quer bzw. orthogonal zur Ebene der Trägerplatte vorgesehen sein, so dass der Pipettierkopf mittels der Feststellschrauben gegen die Trägerplatte gedrückt bzw. gezogen wird.

Das wenigstens eine elektrische Kopplungsmittel ist vorzugsweise als direkter oder indirekter Steckverbinder einer zu dem Pipettierkopf zugehörigen Leiterplatte ausgebildet, wobei vorzugsweise das elektrische Kopplungsmittel als Stecker ausgeführt ist.

Ebenso kann das wenigstens eine elektrische Gegenkopplungsstück als direkter oder indirekter Steckverbinder einer zu dem Pipettierkopfträger zugehörigen Leiterplatte ausgebildet sein, wobei vorzugsweise das elektrische Gegenkopplungsmittel als Buchse ausgeführt ist.

Um eine rasche und sichere elektrische Verbindung zwischen dem Pipettierkopf und dem Pipettierkopfträger herstellen zu können, wird vorgeschlagen, dass das wenigstens eine elektrische Kopplungsmittel und das zugehörige Gegenkopplungsmittel als direkte Steckverbindung derart ausgeführt sind, dass die elektrische Verbindung dadurch herstellbar ist, dass die mechanische Verbindung zwischen dem Pipettierkopf und dem Pipettierkopfträger mittels des wenigstens einen mechanischen Kopplungselements und des zugehörigen mechanischen Gegenkopplungselements gekoppelt wird. Die elektrische Verbindung kann somit in einem Arbeitsgang gemeinsam mit der mechanischen Kopplung hergestellt werden, so dass die elektrische und mechanische Kopplung einfach hergestellt und gelöst werden können.

Bevozugt umfasst der Pipettierkopf einen dem Pipettierkanal zugeordneten Drucksensor, wenigstens ein Speicherelement, und wenigstens einen mit dem Drucksensor verbundenen A/D-Wandler, die vorzugsweise mit der Leiterplatte des Pipettierkopfs verbunden sind. Es ist insbesondere vorgesehen, dass möglichst wenige und kostengünstige elektronische Bauteile auf dem (auswechselbaren) Pipettierkopf bzw. dessen Leiterplatte vorgesehen sind, so dass die Kosten für einen Pipettierkopf gering gehalten werden können. Da der Pipettierkopf insbesondere überdie elektrischen Kopplungsmittel, die auch eine Daten- bzw. Signalkommunikationsverbindung umfassen kann, mit dem Pipettierkopfträger verbunden ist, können beispielsweise teurere Prozessoren zur Auswertung von Signalen oder weitere elektronische Komponenten, die nicht unbedingt auf der Leiterplatte des Pipettierkopfes vorgesehen sein müssen, auf Seiten des Pipettierkopfträgers bzw. des Basisträgers angeordnet werden.

Bevorzugt ist die Druckerzeugungseinrichtung als Pipettierkolbeneinrichtung ausgebildet mit einem am Pipettierkopf vorgesehenen Kolbenantriebsmittel, wobei vorzugsweise das Kolbenantriebsmittel als Linearmotor ausgeführt ist, der insbesondere mit der Leiterplatte des Pipettierkopfs verbunden ist. Durch den Linearmotor kann der Pipettierkolben in axialer Richtung im Pipettierkanal bewegt werden, um die Druckverhältnisse so zu verändern, dass mittels der Pipettierkolbeneinrichtung und einer Pipettierspitze Probenflüssigkeit aspiriert bzw. dispensiert werden kann.

Um die Bewegung des mit dem Pipettierkopfträger betriebsmäßig gekoppelten Pipettierkopfs so zu verändern, dass mittels einer Pipettierspitze Probenflüssigkeit aus einem Probenbehälter aspiriert bzw. in einen Probenbehälter dispensiert werden kann, ist es bevorzugt, dass der Pipettierkopfträger gleitend am Basisträger gelagert ist und ein die Relativbewegung zwischen Pipettierkopfträger und Basisträger bewirkender Trägerantrieb vorgesehen ist mit einem am Basisträger angebrachten Motor, der mittels einer Übertragungseinrichtung, vorzugsweise eines Antriebsriemens, die Gleitbewegung des Pipettierkopfträgers entlang des Basisträgers in der dritten Hauptrichtung (Z) bewirkt.

Gemäß einem weiteren Aspekt wird die Aufgabe der Erfindung gelöst durch einen Pipettierkopf für eine Pipettiervorrichtung, insbesondere einen Pipettierroboter, gemäß Anspruch 1 mit einem Pipettierkanal, an dem eine Pipettierspitze, insbesondere Einweg-Pipettierspitze, koppelbar ist, wobei der Pipettierkanal eine Druckerzeugungsvorrichtung umfasst zum Erzeugen von Druckveränderungen in der Pipettierspitze zum Aspirieren bzw. Dispensieren von Probenflüssigkeit in die Pipettierspitze bzw. aus dieser heraus, und mit wenigstens einem mechanischen Kopplungsmittel und wenigstens einem elektrischen Kopplungsmittel, die am Pipettierkopf angeordnet sind und die dazu eingerichtet sind, mit einem jeweiligen an der Pipettiervorrichtung vorgesehenen mechanischen bzw. elektrischen Gegenkopplungsmittel verbunden zu werden, wobei das wenigstens eine mechanische Kopplungsmittel und das zugehörige Gegenkopplungsmittel derart ausgebildet sind, dass der Pipettierkopf lösbar und spielfrei an der Pipettiervorrichtung befestigbar oder befestigt ist.

Erfindungsgemäß umfasst ein solcher Pipettierkopf eine Dichtungsbetätigungseinrichtung die so ausgebildet ist, dass eine fluiddichte Verbindung zwischen einer Pipettierspitze und dem Pipettierkanal hergestellt oder/und nach Gebrauch der Pipettiespitze gelöst werden kann, wobei ein mit der Dichtungsbetätigungseinrichtung in Wirkverbindung bringbares oder stehendes Antriebsmittel nicht am Pipettierkopf angeordnet ist.

Dabei kann die Dichtungsbetätigungseinrichtung ein hebelartiges Verbindungselement umfassen, das mit dem nicht am Pipettierkopf angeordneten Antriebsmittel in Kraftwirkungsverbindung gebracht werden kann.

Es ist weiter bevorzugt, dass der Pipettierkopf einen die Druckverhältnisse im Pipettierkanal erfassenden Drucksensor umfasst der mit einer nicht am Pipettierkopf angeordneten Steuereinheit, insbesondere einem Prozessor, in Kommunikationsverbindung steht zur Signalübertragung.

Der Pipettierkopf kann eine die Druckerzeugungseinrichtung bildende Pipettierkolbeneinrichtung umfassen mit einem am Pipettierkopf vorgesehenen Kolbenantriebsmittel, wobei das Kolbenantriebsmittel mit einem nicht am Pipettierkopf angeordneten Encoder zur Positionsbestimmung des Kolbenantriebsmittels in Kommunikationsverbindung steht, wobei vorzugsweise das Kolbenantriebsmittel als Linearmotor ausgeführt ist.

Bevorzugt umfasst der Pipettierkopf wenigstens ein Speicherelement, insbesondere eingerichtet zur Zwischenspeicherung von erfassten Drucksignale oder/und Positionssignalen, wobei der Speicher mit einer nicht am Pipettierkopf angeordneten Steuereinheit in Kommunikationsverbindung steht.

Ferner kann der Pipettierkopf eine Leiterplatte umfassen, mit welcher der Drucksensor oder/und das Kolbenantriebsmittel oder/und das wenigstens eine Speicherelement verbunden sind, wobei die Leiterplatte mit der nicht am Pipettierkopf angeordneten Steuereinheit in Kommunikationsverbindung steht.

Bei der oben beschriebenen Pipettiervorrichtung können also wichtige Komponenten, die für eine funktionsgemäße Verwendung erforderlich sind, auf dem Pipettierkopfträger angeordnet sein, so dass der Pipettierkopf selbst weniger Bauteile umfasst und somit günstiger hergestellt werden kann. Solche Komponenten können insbesondere sein: das Antriebsmittel für die Dichtungsbetätigungseinrichtung, den Antrieb des Pipettierkopfträgers in Z-Richtung (vertikale Richtung bezogen auf eine im Betrieb befindliche, auf einer im wesentlichen horizontalen Platte gelagerten Pipettievorrichtung), sowie eine Steuereinheit, die wenigstens einen Prozessor umfasst zur Verarbeitung von Signalen, die am Pipettierkopf erfasst werden bzw. zur Ausgabe von Signalen, entsprechend denen Einstellungen am Pipettierkopf, etwa der Druckerzeugungseinrichtung, vorgenommen werden müssen. Weniger kostenintensive Bauteile, wie etwa Speicherchips, Drucksensor o.ä. sind dem Pipettierkopf selbst zugeordnet. Die Zuordnung von elektronischen Bauteilen zum Pipettierkopf bzw. zum Pipettierkopfträger kann auch davon abhängen, wie stark eine Verzögerung bei der Signalverarbeitung ist bzw. sein darf, um einen sicheren Betrieb der Pipettiervorrichtung zu gewährleisten.

Nachfolgend wird eine Ausführungsform einer Pipettiervorrichtung mit Pipettierkopfträger und Pipettierkopf unter Bezugnahme auf die anliegenden Figuren beispielhaft beschrieben.
Fig. 1 zeigt in einer vereinfachten schematischen Perspektivdarstellung eine Ausführungsform einer Pipettiervorrichtung, die in ihrem unteren Teil in einer Halbschale eines Gehäuses aufgenommen ist.
Fig. 2 zeigt in einer schematischen seitlichen Aufrissdarstellung von hinten einen Basisträger, einen Pipettierkopfträger und einen Pipettierkopf, wobei der Pipettierkopf vom Pipettierkopfträger getrennt ist.
Fig. 3 zeigt in einer schematischen seitlichen Aufrissdarstellung von hinten den Basisträger, den Pipettierkopfträger und den Pipettierkopf, wobei der Pipettierkopf mit dem Pipettierkopfträger gekoppelt ist.
Fig. 4 zeigt in einer schematischen seitlichen Aufrissdarstellung von vorne den Basisträger, den Pipettierkopfträger und den Pipettierkopf, wobei der Pipettierkopf vom Pipettierkopfträger getrennt ist.
Fig. 5 zeigt in einer schematischen seitlichen Aufrissdarstellung von vorne den Basisträger, den Pipettierkopfträger und den Pipettierkopf, wobei der Pipettierkopf mit dem Pipettierkopfträger gekoppelt ist.
Fig. 6 zeigt in den Teilfiguren a) und b) zwei Querschnitte entsprechend der Schnittlinien VIa-VIa der Fig. 4 und VIb-VIb der Fig. 5.
Fig. 7 zeigt in den Teilfiguren a) und b) zwei Querschnitte entsprechend der Schnittlinien VIIa-VIIa der Fig. 4 und VIIb-VIIb der Fig. 5.

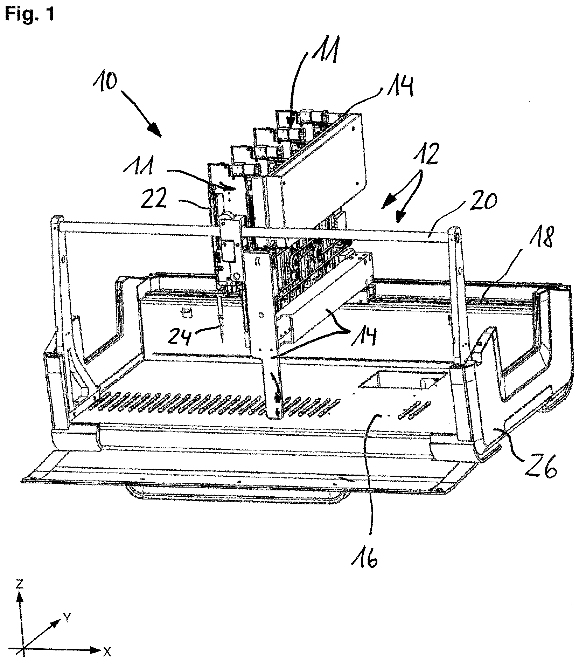

Fig. 1 zeigt in einer vereinfachten und schematischen Perspektivdarstellung eine Pipettiervorrichtung 10 mit einer Positioniervorrichtung 12, die einen in einer ersten Hauptrichtung (X) beweglichen Hauptrahmen 14 umfasst. Der Hauptrahmen 14 ist in einem hinteren Teil einer Aufnahmeplatte 16 auf einer schienenartigen Konstruktion 18 gelagert und in einem vorderen Bereich der Aufnahmeplatte 16 an einem stangenartigen Träger 20 rollend abgestützt. Für den Hauptrahmen 14 ist eine nicht näher dargestellte Antriebseinrichtung vorgesehen, welche die Bewegung entlang der schienenartigen Konstruktion 18 und dem Träger 20 ermöglicht.

Für die nachfolgende Beschreibung ist zu beachten, dass "vorne" bzw. "von vorne" einer Blickrichtung entsprechend dem Pfeil der Y-Richtung in Fig. 1 entspricht, wobei "hinten" bzw. "von hinten" einer dieser Y-Pfeilrichtung entgegengesetzten Blickrichtung entspricht. Entsprechend ist die Blickrichtung in Fig. 1 von schräg vorne festgelegt und man blickt auf die Pipettiervorrichtungen 10 von schräg vorne.

Die hier dargestellte Pipettiervorrichtung 10 umfasst mehrere Pipettiereinheiten 11 mit jeweiligen Pipettierköpfen 22, an denen insbesondere zur Einwegnutzung vorgesehene Pipettierspitzen 24 anbringbar bzw. angebracht sind. Die Pipettiervorrichtung 10 ist in einer unteren Halbschale 26 eines Gehäuses aufgenommen, das Gegenstand der gleichzeitig eingereichten Deutschen Patentanmeldung mit dem Titel "Pipettiervorrichtung mit Gehäuse" (Anmeldungs-Nr. 10 2014 108 689.9) ist.

Die dargestellte Anzahl von vier Pipettiereinheiten 11 ist exemplarisch. Es könnten entlang des Hauptrahmens 14 auch weniger oder mehr Pipettiereinheiten 11 vorgesehen sein. Ferner ist darauf hinzuweisen, dass auch zwei Hauptrahmen 14 mit jeweils einer oder mehreren Pipettiereinheiten 11 vorgesehen sein können, so dass beispielsweise eine Verdoppelung der Anzahl Pipettiereinheiten 11 vorgesehen werden kann.

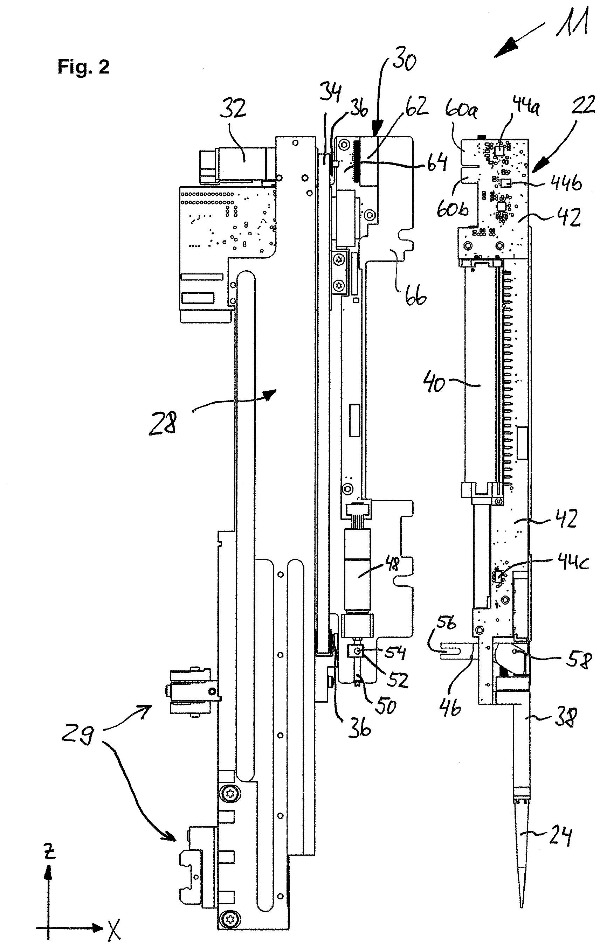

Nachfolgend wird unter Bezugnahme auf die Fig. 2 bis 7 eine Ausführungsform einer Pipettiereinheit 11 einer Pipettiervorrichtung 10 beschrieben. Es wird darauf hingewiesen, dass in den Figuren 2 bis 7 zur besseren Verständlichkeit auch Bezugszeichen aufgenommen worden sind, die für eine betreffende Figur nicht immer nochmals im Detail beschrieben worden sind. Gleiche Bezugszeichen in den Figuren bezeichnen also gleiche Bauteile, auch wenn diese nicht nochmals explizit erwähnt sind.

Fig. 2 zeigt in einer schematischen seitlichen Aufrissdarstellung von hinten eine Pipettiereinheit 11 mit einem Basisträger 28. Dieser ist bei 29 am Hauptträger 14 beweglich abgestützt, so dass der Basisträger 28 entlang des Hauptträgers 14 in Y-Richtung beweglich ist. Da es auf die Art der Verbindung und des Antriebs für den Basisträger 28 im Folgenden nicht ankommt, wird hier auf eine weitere Beschreibung einer solchen Kopplung zwischen Basisträger 28 und Hauptrahmen 14 verzichtet.

Mit dem Basisträger 28 ist ein Pipettierkopfträger 30 gekoppelt. Der Pipettierkopfträger 30 ist mittels einer Antriebsvorrichtung 32, die am Basisträger 28 angebracht ist, in Z-Richtung relativ zum Basisträger nach unten bzw. oben hin und her beweglich. Die Antriebseinrichtung 32 ist hier als Elektromotor ausgeführt, wobei zum Übertragen der Drehbewegung des Elektromotors in ein translatorische Bewegung in Z-Richtung ein Riemen 34, insbesondere Zahnriemen vorgesehen ist, der an Umlenkrollen bzw. Zahnrädern 36 eingehängt ist und mit dem Pipettierkopfträger 30 verbunden ist.

In Fig. 2 ist ferner der Pipettierkopf 22 ersichtlich in einer vom Pipettierkopfträger 30 gelösten Stellung. Der Pipettierkopf 22 umfasst einen Pipettierkanal 38, an dem eine Pipettierspitze 24 angebracht ist. Wie bereits ausgeführt, handelt es sich bei der Pipettierspitze 24 vorzugsweise um eine Einweg-Pipettierspitze, auch als Tip bezeichnet. Der Pipettierkanal 38 steht mit einem in dieser Darstellung nicht sichtbaren Pipettierkolben in Fluidverbindung, wobei der Pipettierkolben mittels eines am Pipettierkopf 22 angebrachten Linearmotors 40 so bewegt werden kann, dass die Druckverhältnisse im Pipettierkanal 38 und der Pipettierspitze 24 verändert werden können, zum Aspirieren (Ansaugen) bzw. Dispensieren (Abgeben, Ausstoßen) von Probenflüssigkeit in die bzw. aus der Pipettierspitze 24.

Der Linearmotor 40 ist mit einer Leiterplatte 42 verbunden, mit der verschiedene weitere elektronische Bauteile, wie etwa Speicherelement, A/D-Wandler, Kommunikationsbus, Drucksensor, Positionssensor, verbunden sind. Diese elektronischen Bauteile und ihre Anschlussstellen sind beispielhaft mit dem Bezugszeichen 44a-c angedeutet, wobei es bei der vorliegenden beispielhaften Figur nicht darauf ankommt, wo exakt welcher elektronische Bauteil des Pipettierkopfes 22 auf der Leiterplatte 42 angeordnet ist.

Am Pipettierkopf 22 ist weiter ein hebelartiges Verbindungselement 46 einer Dichtungsbetätigungseinrichtung ersichtlich, das mit einem am Pipettierkopfträger 30 angeordneten Antriebsmittel 48 gekoppelt werden kann. Das Antriebsmittel 48 ist bevorzugt als Elektromotor ausgeführt mit einer ein Außengewinde aufweisenden Welle 50, entlang welcher ein Kopplungsstück 52 mit Innengewinde je nach Drehrichtung des Elektromotors 48 nach oben bzw. unten beweglich ist. Das Kopplungsstück 52 weist radiale Vorsprünge 54 auf, die in komplementäre Aussparungen 56 des Verbindungselements 46 eingreifen können. Dieser Eingriff verhindert ein verdrehen des Kopplungselement 52 bei drehender Welle 50, so dass das Kopplungselement entlang der Welle 50 aufgrund der Gewindeverbindung nach oben bzw. unten bewegt wird. Die Bewegung des Kopplungselements 52 wird durch das hebelartige Verbindungselement 46 auf eine im Pipettierkanal 38 angeordnete, hier nicht sichtbare Dichtungsbetätigungseinrichtung, insbesondere eine Quetschhülse übertragen, die derart ausgeführt ist, dass sie bei angebrachter Pipettierspitze 24 in axialer und radialer Richtung auf eine als O-Ring ausgeführte innen liegende Dichtung drückt, um eine verbesserte Dichtwirkung zu erreichen. Um eine gewünschte axiale Bewegung des Dichtungsbetätigungeinrichtung bzw. der Quetschhülse zu ermöglichen, ist das Verbindungselement 46 um eine Schwenkachse 58 drehbar, so dass eine axiale Bewegung des Kopplungselements 52 eine Schwenkbewegung des Verbindungselements 46 bewirkt, das mit der Quetschhülse gekoppelt ist.

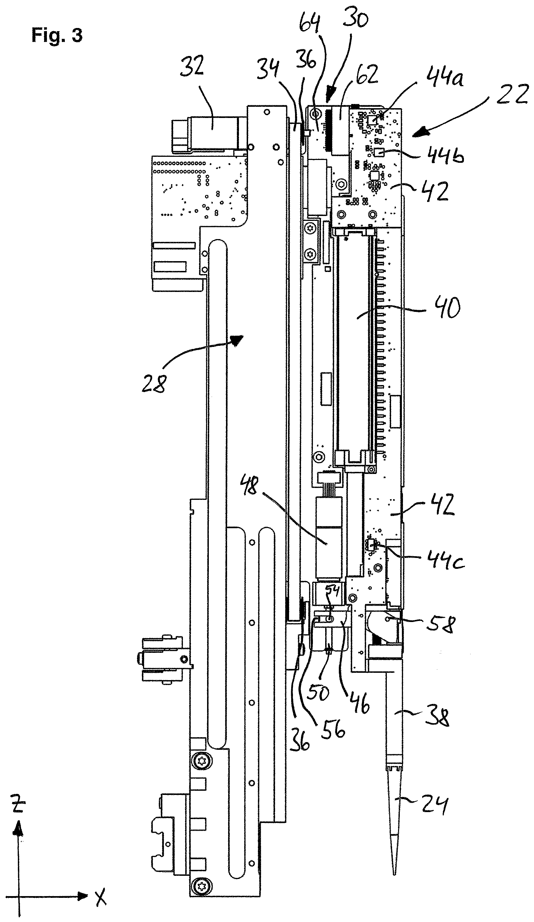

Fig. 3 zeigt den am Pipettierkopfträger 30 gekoppelten Pipettierkopf 22, wobei aus dieser Darstellung ersichtlich ist, dass in der Fig. 2 noch sichtbare elektrische Steckverbinder 60a, 60b (elektrische Kopplungsmittel) der Leiterplatte 42 in einem als Buchse 62 ausgeführten Gegenstück (elektrische Gegenkopplungsmittel) am Pipettierkopfträger 30 bzw. dessen Leiterplatte 64 eingeführt sind, so dass eine elektrische Verbindung zwischen dem Pipettierkopf 22 und dem Pipettierkopfträger 30 hergestellt ist.

Ferner ist aus dieser Darstellung auch der Eingriff der Vorsprünge 54 des Kopplungsmittels 52 in die entsprechenden Aussparungen 56 am hebelartigen Verbindungselement 46 ersichtlich.

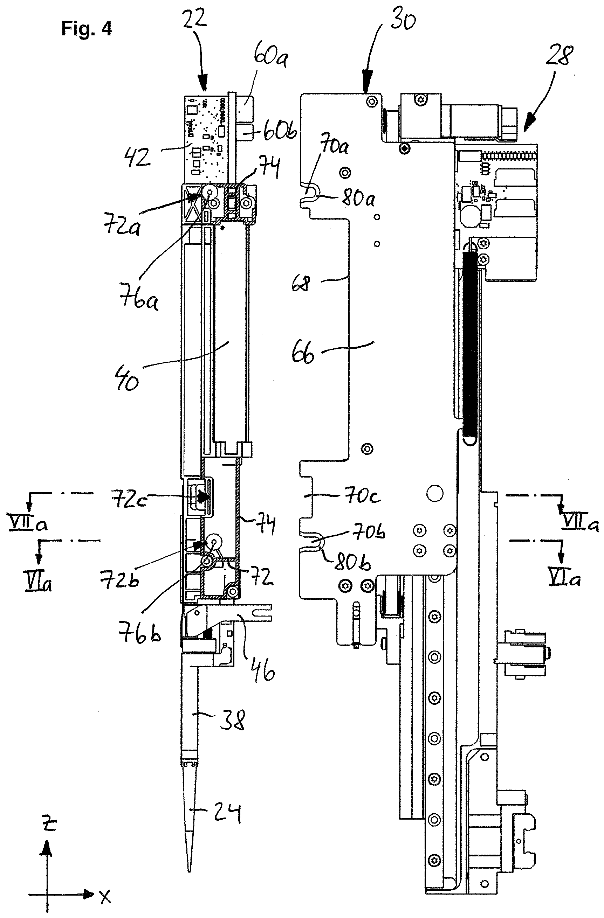

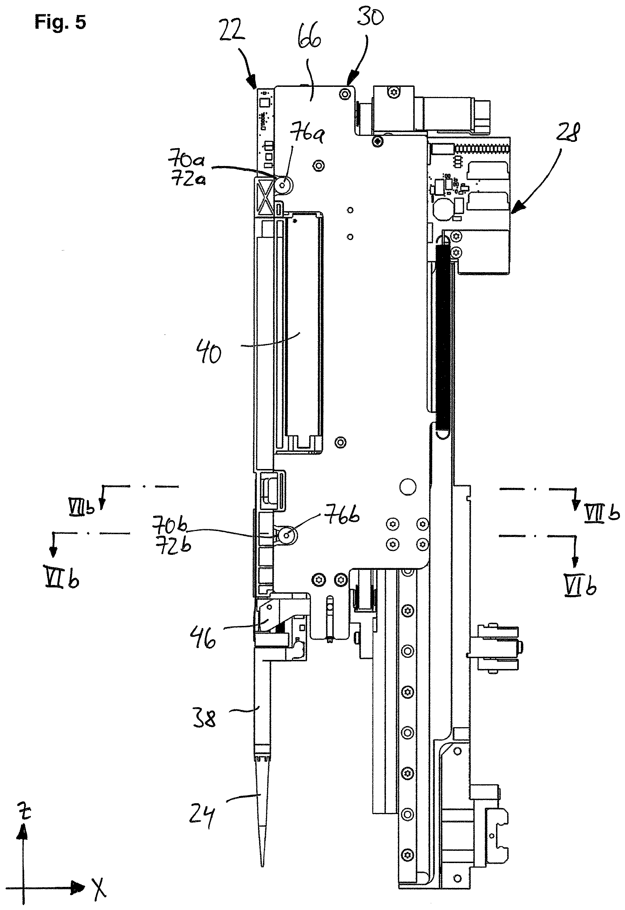

Die mechanische Kopplung des Pipettierkopfs 22 mit dem Pipettierkopfträger 30 soll anhand der Figuren 4 und 5 näher erläutert werden, welche eine Pipettiereinheit 11 von vorne zeigen.

Am Pipetierkopfträger 30 ist eine im Betrieb der Pipettiervorrichtung zu der X-Z-Ebene parallel angeordnete Trägerplatte 66 angebracht. Diese Trägerplatte 66 ist auch in Figur 2 teilweise ersichtlich. Die Trägerplatte 66 weist an ihrem dem Pipettierkopf 22 zugewandten Rand 68 mehrere Aussparungen 70a, 70b, 70c auf, die als mechanische Gegenkopplungmittel vorgesehen sind. Mit diesen Gegenkopplungsmittel können am Pipettierkopf 22 vorgesehene Kopplungsmittel 72a, 72b, 72c ein Eingriff gebracht werden, so dass zwischen dem Pipettierkopf 22 und dem Pipettierkopfträger 30 formschlüssige Verbindungen herstellbar sind, welche die Relativbewegung zwischen Pipettierkopf 22 und Pipettierkopfträger 30 im Betrieb verhindern. Die hier dargestellten Kopplungsmittel 72a, 72b, 72c und die Gegenkopplungsmittel 70a, 70b, 70c verhindern im mechanisch gekoppelten Zustand eine weiteres Bewegen von Pipettierkopf 22 und Pipettierkopfträger 30 in X-Richtung aufeinander zu und ein Bewegen in Z-Richtung, also vertikaler Richtung. Ein solcher gekoppelter Zustand von Pipettierkopf 22 und Pipettierkopfträger 30 ist in der Fig. 5 dargestellt.

Um auch eine relative Bewegung von Pipetierkopf 22 und Pipettierkopftäger 30 in Y-Richtung im gekoppelten Zustand zu verhindern, sind am Pipettierkopf 22 mehrere Anschlagselemente 74 vorgesehen, die als Stege ausgebildet sein können. Diese Stege 74 kommen im gekoppelten Zustand von Pipettierkopf 22 und Pipettierkopfträger 30 mit der Rückseite der Trägerplatte 66 in Kontakt. Um die Befestigung des Pipettierkopfs 22 am Pipettierkopfträger 30 endgültig zu ermöglichen, sind auf der Vorderseite der Trägerplatte 66 noch Arretiermittel 76a und 76b vorgesehen, die vorzugsweise als Feststellschrauben ausgebildet sind. Im Ausführungsbeispiel sind den beiden Kopplungsmitteln 72a, 72b entsprechende Feststellschrauben 76a, 76b zugeordnet. Durch Anziehen dieser Feststellschrauben 76a, 76b, wird die Trägerplatte 66 zwischen den Feststellschrauben 76a, 76b und den Anschlagsmitteln (Stegen) 74 des Pipettierkopfs 22 festgeklemmt, so dass eine feste aber lösbare mechanische Kopplung zwischen Pipettierkopf 22 und Pipettierkopfträger 30 herstellbar ist bzw. hergestellt ist (Fig. 5).

Die Ausnehmungen 70a, 70b (Gegenkopplungsmittel) der Trägerplatte 66 sind als im Wesentlichen U-förmige Ausnehmungen ausgestaltet, in die ein jeweiliger zylinderischer Vorsprung, der mechanische Kopplungsmittel 72a, 72b einführbar bzw. eingeführt ist.

Im Bereich des Kopplungsmittels 72c erfolgt keine weitere Befestigung zwischen Pipettierkopf 22 und Pipettierkopfträger 30. Dieses Kopplungselement 76c kann daher auch als Anschlagsmittel in X- und Z-Richtung verstanden werden.

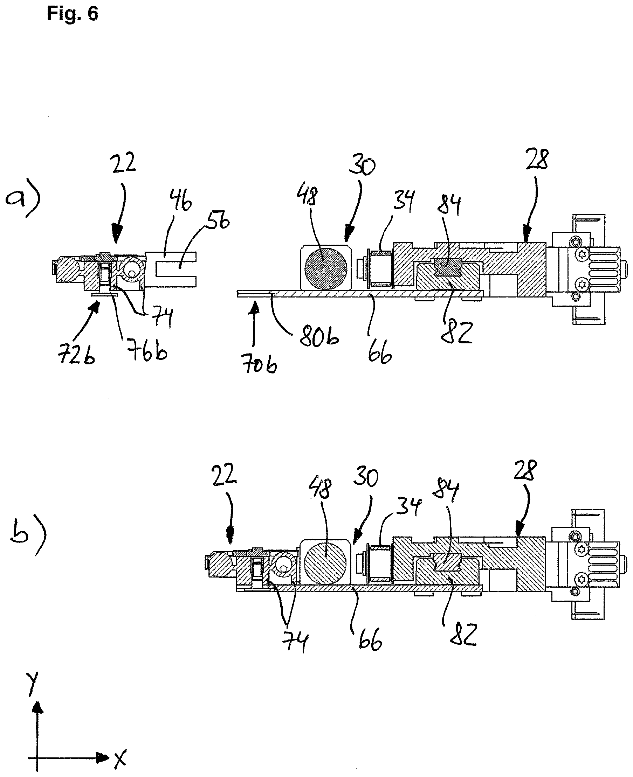

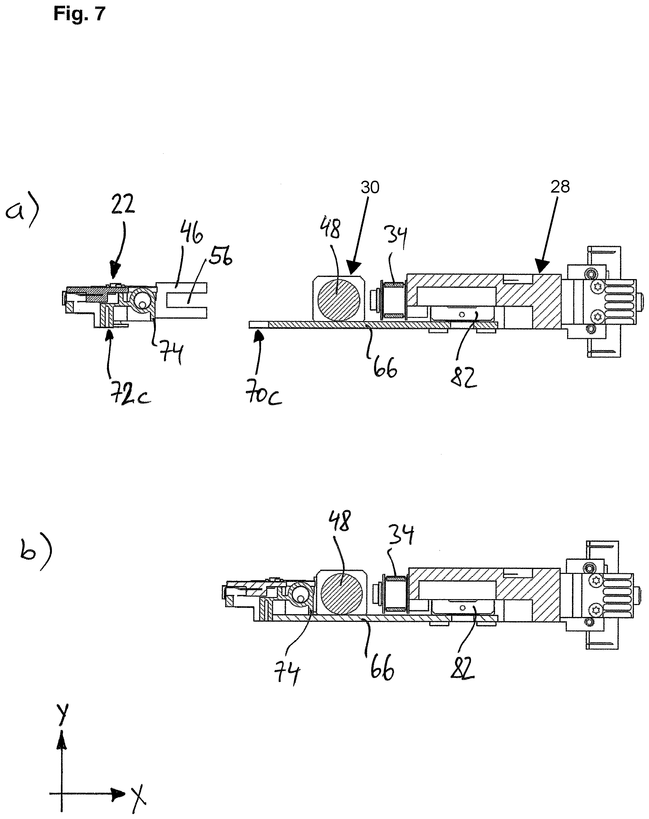

Die Figuren 6 und 7 zeigen in ihren Teilfiguren a) und b) jeweils Querschnitte durch den Pipettierkopf 22 und den Pipettierkopfträger 30 im gekoppelten und ungekoppelten Zustand. Dabei ist in Fig. 6 ein Schnitt auf Höhe von Kopplungsmittel 72b und Gegenkopplungsmittel 70b dargestellt und in Fig. 7 ein Schnitt auf Höhe des Kopplungsmittels 72c bzw. Gegenkopplungsmittel 70c.

In den Fig. 6a und 7a ist links der nicht gekoppelte Pipettierkopf 22 ersichtlich sowie das hebelartige Verbindungselement 46 mit seiner Ausnehmung 56 zur Aufnahme des Kopplungselements 52 (Fig. 2), das mit dem Antriebsmittel (Elektromotor) 48 der Dichtungsbetätigungseinrichtung verbindbar bzw. verbunden ist. Ferner können in beiden Figuren der Pipettierkopfträger 30 und der Basisträger 28 erkannt werden.

In Fig. 6a ist ferner ersichtlich, dass die Ausnehmung 70b (Gegenkopplungsmittel) in Y-Richtung stufenartig ausgebildet ist, so dass eine Anlagefläche 80b ausgebildet ist, die mit einer Rückseite der Feststellschraube 76b, insbesondere ihres Schraubenkopfes in Kontakt kommen kann bzw. steht, so dass die Trennplatte 66 in Y-Richtung gesichert ist bei festgezogener Feststellschraube 76b. Die Ausgestaltung der Ausnehmung 70a (Fig. 4) ist im Übrigen in gleicher Weise ausgeführt und es ist in der dortigen Figur ebenfalls eine stufenartige Anlagefläche 80a ersichtlich. Aus diesen Schnittdarstellungen ist auch ersichtlich, dass die Trägerplatte 66 an einem Gleitschuh 82 angebracht ist, der entlang einer mit dem Basisträger 28 verbundenen Gleitschiene 84 in Z-Richtung verschoben werden kann. Wie bereits oben ausgeführt, erfolgt die Bewegung des Pipetierkopfträgers 30 in Z-Richtung relativ zum Basisträger 28 mittels eines Riemenantriebs, von dem der umlaufende (Zahn-)Riemen 34 sichtbar ist.

Das in der Fig. 7a dargestellte Kopplungsmittel 72c wirkt mit der Ausnehmung 70c (Gegenkopplungmittel) zusammen. Im gekoppelten Zustand (Fig. 7b) liegt das Kopplungsmittel 72c (Fig. 7a) in X-Richtung und in Z-Richtung an den Innenrändern der Ausnehmung 70c (Fig. 7a) an, so dass eine Bewegung des Pipettierkopfs 22 in diese beiden Richtungen verhindert ist. Dies ist besonders bei der Montage des Pipettierkopfs 22 am Pipettierkopfträger 30 hilfreich, da das Kopplungsmittel 72c eine relative Sollposition des Pipettierkopfs 22 zum Pipettierkopfträger 30 festlegt und eine solche relative Festlegung zueinander nicht im Bereich der beiden Feststellschrauben 76a, 76b durch Kippen bzw. Ausrichten des Pipettierkopfs 22 in der X-Z-Ebene erfolgen muss. Unterstützt wird diese Positionierung des Pipettierkopfs 22 bei der Montage auch durch die an der Trägerplatte 66, insbesondere deren Rückseite anliegenden Anschlagselemente 74 (Stege). Der Pipettierkopf 22 kann bei der Montage also in einfacher Weise in mechanischen Kopplungsbereichen, insbesondere im Zusammenspiel von Gegenkopplungsmitteln 70a-c mit Kopplungsmitteln 72a-c sowie Anschlagsmitteln 74 mit der Trennwand 66 in einer definierten Relativstellung zum Pipettierkopfträger 30 positioniert werden und anschließend durch Festziehen der Feststellschrauben gesichert werden.

Die hier vorgstellte Struktur eines mit dem Pipettierkopfträger 30 auf einfache Weise lösbar verbundenen Pipettierkopfs 22 dient der optimierten Auswechselbarkeit des Pipettierkopfs 22 zu Wartungszwecken oder bei Fehlfunktionen. Am Pipettierkopf 22 sind nur die unbedingt notwendigen Bauteile und elektronischen Komponenten angebracht, um die Kosten für den Pipettierkopf möglichst gering zu halten. Teure elektronische Komponenten, wie etwa Prozessoren zu Steuerung, sind am Pipettierkopfträger 30 bzw. am Basisträger 28 vorgesehen, so dass beim Austausch eines Pipettierkopfs 22 keine teuren Bauteile ersetzt werden müssen.

Besonders effektiv ist auch die Ausgestaltung der mechanischen und elektrischen Kopplungen, die beim Bewegen des Pipettierkopfs 22 im Wesentlichen in X-Richtung auf den Pipettierkopfträge 30 zu gemeinsam hergestellt werden können, sozusagen in einem Arbeitsschritt. Dies gilt auch für die Kopplung der Dichtungsbetätigungseinrichtung mit dem am Pipettierkopfträger 30 angebrachten Antriebsmittel 48. Auch diese Kopplung erfolgt in einem Arbeitsschritt beim Herstellen der mechanischen und elektrischen Kopplungen zwischen Pipettierkopf 22 und Pipettierkopfträger 30.

## Patentansprüche

1. Pipettierkopf (22) für eine Pipettiervorrichtung (10), insbesondere einen Pipettierroboter, mit einem Pipettierkanal (38), an dem eine Pipettierspitze (24), insbesondere Einweg-Pipettierspitze, koppelbar ist, wobei der Pipettierkanal (38) eine Druckerzeugungsvorrichtung umfasst zum Erzeugen von Druckveränderungen in der Pipettierspitze (24) zum Aspirieren bzw. Dispensieren von Probenflüssigkeit in die Pipettierspitze (24) bzw. aus dieser heraus, und
mit wenigstens einem mechanischen Kopplungsmittel (72a, 72b, 72c) und wenigstens einem elektrischen Kopplungsmittel (60a, 60b), die am Pipettierkopf (22) angeordnet sind und die dazu eingerichtet sind, mit einem jeweiligen an der Pipettiervorrichtung (10) vorgesehenen mechanischen bzw. elektrischen Gegenkopplungsmittel (70a, 70b, 70c) verbunden zu werden, wobei das wenigstens eine mechanische Kopplungsmittel (72a, 72b, 72c) und das zugehörige Gegenkopplungsmittel (70a, 70b, 70c) derart ausgebildet sind, dass der Pipettierkopf (22) lösbar und spielfrei an der Pipettiervorrichtung (10) befestigbar ist, **dadurch gekennzeichnet, dass**
der Pipettierkopf eine Dichtungsbetätigungseinrichtung umfasst, die so ausgebildet ist, dass eine fluiddichte Verbindung zwischen einer Pipettierspitze (24) und dem Pipettierkanal (38) hergestellt oder/und nach Gebrauch der Pipettiespitze (24) gelöst werden kann, wobei ein mit der Dichtungsbetätigungseinrichtung in Wirkverbindung bringbares oder stehendes Antriebsmittel (48) nicht am Pipettierkopf (22) angeordnet ist, wobei die Dichtungsbetätigungseinrichtung des Pipettierkopfs und das die Dichtungsbetätigungseinrichtung antreibendes Antriebsmittel betriebsmäßig derart zusammenwirken, dass die fluiddichte Verbindung zwischen einer Pipettierspitze und dem Pipettierkanal hergestellt oder/und nach Gebrauch der Pipettierspitze gelöst werden kann.

2. Pipettierkopf nach Anspruch 1, wobei die Dichtungsbetätigungseinrichtung ein hebelartiges Verbindungselement (46) umfasst, das mit dem nicht am Pipettierkopf (22) angeordneten Antriebsmittel (48) lösbar in Kraftwirkungsverbindung gebracht werden kann.

3. Pipettierkopf nach Anspruch 1 oder 2, ferner umfassend einen die Druckverhältnisse im Pipettierkanal (38) erfassenden Drucksensor der mit einer nicht am Pipettierkopf (22) angeordneten Steuereinheit, insbesondere einem Prozessor, in Kommunikationsverbindung steht zur Signalübertragung;
bevorzugt weiter umfassend eine die Druckerzeugungseinrichtung bildende Pipettierkolbeneinrichtung mit einem am Pipettierkopf (22) vorgesehenen Kolbenantriebsmittel (40), wobei das Kolbenantriebsmittel mit einem nicht am Pipettierkopf (22) angeordneten Encoder zur Positionsbestimmung des Kolbenantriebsmittels in Kommunikationsverbindung steht, wobei vorzugsweise das Kolbenantriebsmittel als Linearmotor (40) ausgeführt ist;
bevorzugt weiter umfassend wenigstens ein Speicherelement (44a), insbesondere eingerichtet zur Zwischenspeicherung von erfassten Druck- oder und Positionssignalen, wobei das Speicherelement mit einer nicht am Pipettierkopf (22) angeordneten Steuereinheit in Kommunikationsverbindung steht; und
bevorzugt weiter umfassend eine Leiterplatte (42), mit welcher der Drucksensor (44c) oder/und das Kolbenantriebsmittel (40) oder/und das wenigstens eine Speicherelement (44a) verbunden sind, wobei die Leiterplatte (42) mit der nicht am Pipettierkopf (22) angeordneten Steuereinheit in Kommunikationsverbindung steht.

4. Pipettiervorrichtung, insbesondere Pipettierroboter, umfassend:
eine Positioniervorrichtung (12), die einen in einer ersten Hauptrichtung (X) beweglichen Hauptrahmen (14) umfasst, wobei die Pipettiervorrichtung (10) entlang des Hauptrahmens (14) in einer zweiten Hauptrichtung (Y) beweglich ist;
wenigstens einen Basisträger (28) und wenigstens einen Pipettierkopfträger (30), wobei der Basisträger (28) und der Pipettierkopfträger (30) derart miteinander verbunden sind, dass sie in einem an der Positioniervorrichtung (12) angebrachten Zustand in der ersten und der zweiten Hauptrichtung (X, Y) gemeinsam beweglich sind und relativ zueinander in einer dritten Hauptrichtung (Z), die orthogonal zu den beiden anderen Hauptrichtungen ist, beweglich sind;
wenigstens einen Pipettierkopf (22) gemäß einem der Ansprüche 1 bis 3, wobei
wenigstens das mechanische Kopplungsmittel (72a, 72b, 72c) und das wenigstens eine elektrische Kopplungsmittel (60a, 60b) des Pipettierkopfs (22) mit einem jeweiligen mechanischen bzw. elektrischen Gegenkopplungsmittel (70a, 70b, 70c, 62) verbindbar sind, wobei das jeweilige Gegenkopplungsmittel (70a, 70b, 70c, 62) am Pipettierkopfträger (30) ausgebildet ist;
wobei das wenigstens eine mechanische Kopplungsmittel (72a, 72b, 72c) und das jeweils zugehörige Gegenkopplungsmittel (70a, 70b, 70c) derart ausgebildet sind, dass der Pipettierkopf (22) lösbar und spielfrei am Pipettierkopfträger (30) koppelbarist, wobei
die Dichtungsbetätigungseinrichtung des Pipettierkopfs (22) und ein die Dichtungsbetätigungseinrichtung antreibendes Antriebsmittel (48) betriebsmäßig derart zusammenwirken, dass die fluiddichte Verbindung zwischen einer Pipettierspitze (24) und dem Pipettierkanal (38) hergestellt oder/und nach Gebrauch der Pipettiespitze (24) gelöst werden kann, wobei das Antriebsmittel (48) am Pipettierkopfträger (30) angeordnet ist.

5. Pipettiervorrichtung nach Anspruch 4, wobei das hebelartige Verbindungselement (46) und das wenigstens eine mechanische Kopplungsmittel (72a, 72b, 72c) derart ausgebildet sind, dass die Verbindung zwischen der Dichtungsbetätigungseinrichtung und dem Antriebsmittel (48) durch das hebelartigen Verbindungselement (46) und die Verbindung des wenigstens einen Kopplungsmittel (72a, 72b, 72c) mit dem zugehörigen Gegenkopplungsmittel (70a,70b, 70c) dadurch herstellbar ist, dass der Pipettierkopf (22) mit dem Pipettierkopfträger (30) gekoppelt wird.

6. Pipettiervorrichtung nach einem der Ansprüche 4 oder 5, wobei der Pipettierkopfträger (30) eine Trägerplatte (66) umfasst, die das wenigstens eine Gegenkopplungsmittel (70a, 70b, 70c) aufweist, wobei vorzugsweise die Trägerplatte (66) in einem montierten Zustand des Pipettierkopfträgers (30) an der Positioniervorrichtung (12) im Wesentlichen parallel zu einer von der ersten und dritten Hauptrichtung (X, Z) aufgespannten Ebene ist, wobei vorzugsweise das wenigstens eine Gegenkopplungsmittel (70a, 70b, 70c) als Ausnehmung in der Trägerplatte (66) ausgebildet ist, vorzugsweise als U-förmige Ausnehmung.

7. Pipettiervorrichtung nach einem der Ansprüche 4 bis 6, wobei das wenigstens eine mechanische Kopplungsmittel (72a, 72b, 72c) als Vorsprung ausgebildet ist, vorzugsweise als zylindrischer Vorsprung, wobei vorzugsweise die Ausnehmung (70a, 70b, 70c) und der Vorsprung (72a, 72b, 72c) derart ausgebildet sind, dass in wenigstens einer Hauptrichtung (X, Z) eine formschlüssige Verbindung zwischen dem Pipettierkopf (22) und dem Pipettierkopfträger (30) herstellbar ist.

8. Pipettiervorrichtung nach einem der Ansprüche 6 oder 7, wobei am Pipettierkopf (22) wenigstens ein Anschlagselement (72c, 74) vorgesehen ist, das im montiertem Zustand des Pipettierkopfs (22) an dem Pipettierkopfträger (30) an der Trägerplatte (66) anliegt.

9. Pipettiervorrichtung nach einem der Ansprüche 4 bis 8, wobei sie ferner Arretiermittel (76a, 76b) umfasst, die dazu eingerichtet sind, die mechanische Verbindung zwischen dem wenigstens einen mechanischen Kopplungsmittel (72a, 72b) und dem zugehörigen Gegenkopplungsmittel (70a, 70b) zu sichern, wobei vorzugsweise die Arretiermittel (76a, 76b) als Festellschrauben ausgebildet sind

10. Pipettiervorrichtung nach einem der Ansprüche 4 bis 9, wobei das wenigstens eine elektrische Kopplungsmittel (60a, 60b) als direkter oder indirekter Steckverbinder einer zu dem Pipettierkopf (22) zugehörigen Leiterplatte (42) ausgebildet ist, wobei vorzugsweise das elektrische Kopplungsmittel (60a, 60b) als Stecker ausgeführt ist, wobei vorzugsweise das wenigstens eine elektrische Gegenkopplungsstück (62) als direkter oder indirekter Steckverbinder einer zu dem Pipettierkopfträger (30) zugehörigen Leiterplatte (64) ausgebildet ist, wobei vorzugsweise das elektrische Gegenkopplungsmittel (62) als Buchse ausgeführt ist.

11. Pipettiervorrichtung nach Anspruch 10, wobei das wenigstens eine elektrische Kopplungsmittel (60a, 60b) und das zugehörige Gegenkopplungsmittel (62) als direkte Steckverbindung derart ausgeführt sind, dass die elektrische Verbindung dadurch herstellbar ist, dass die mechanische Verbindung zwischen dem Pipettierkopf (22) und dem Pipettierkopfträger (30) mittels des wenigstens einen mechanischen Kopplungselements (72a, 72b, 72c) und des zugehörigen mechanischen Gegenkopplungselements (70a, 70b, 70c) gekoppelt wird.

12. Pipettiervorrichtung nach einem der Ansprüche 4 bis 11, wobei der Pipettierkopf (22) ferner wenigstens ein Speicherelement, und wenigstens einen mit dem Drucksensor verbundenen A/D-Wandler umfasst, die vorzugsweise ebenso wie der Drucksensor mit der Leiterplatte (42) des Pipettierkopfs (22) verbunden sind, wobei vorzugsweise die Druckerzeugungseinrichtung als Pipettierkolbeneinrichtung ausgebildet ist mit einem am Pipettierkopf (22) vorgesehenen Kolbenantriebsmittel (40), wobei vorzugsweise das Kolbenantriebsmittel als Linearmotor (40) ausgeführt ist, der insbesondere mit der Leiterplatte (42) des Pipettierkopfs (22) verbunden ist.

13. Pipettiervorrichtung nach einem der Ansprüche 4 bis 12, wobei der Pipettierkopfträger (30) gleitend am Basisträger (28) gelagert ist und ein die Relativbewegung zwischen Pipettierkopfträger (30) und Basisträger (28) bewirkender Trägerantrieb (32, 34) vorgesehen ist mit einem am Basisträger (28) angebrachten Motor (32), der mittels einer Übertragungseinrichtung, vorzugsweise eines Antriebsriemens (34), die Gleitbewegung des Pipettierkopfträgers (30) entlang des Basisträgers (28) in der dritten Hauptrichtung (Z) bewirkt.

## Claims

1. Pipette head (22) for a pipette device (10), in particular a pipette robot, with a pipette channel (38), to which a pipette tip (24), in particular a disposable pipette tip, can be coupled, wherein the pipette channel (38) comprises a pressure generating device for producing pressure changes in the pipette tip (24) for the aspirating or dispensing of sample fluid into the pipette tip (24) or out of it respectively, and
with at least one mechanical coupling means (72a, 72b, 72c) and at least one electrical coupling means (60a, 60b), which are arranged at the pipette head (22), and which are configured such as to be connected to a respective mechanical or electrical counter-coupling means (70a, 70b, 70c), wherein the at least one mechanical coupling means (72a, 72b, 72c) and the associated counter-coupling means (70a, 70b, 70c) are configured in such a way that the pipette head (22) can be secured to the pipette device (10) in a detachable manner and free of play, **characterized in that**
the pipette head comprises a sealing actuation device, which is configured in such a way that a fluid-tight connection can be produced between a pipette tip (24) and the pipette channel (38) and/or released after the use of the pipette tip (24), wherein a drive means (48), which can be brought into work connection or is in work connection with the sealing actuation device, is not arranged at the pipette head (22), wherein the sealing actuation device of the pipette head and the drive means driving the sealing actuation device interact operationally in such a way that the fluid-tight connection between a pipette tip and the pipette channel is produced and/or can be detached after the use of the pipette tip.

2. Pipette head according to claim 1, wherein the sealing actuation device comprises a lever-type connecting element (46), which can be brought into a force-imposing contact with the drive means (48) not arranged at the pipette head (22).

3. Pipette head according to claim 1 or 2, further comprising a pressure sensor, detecting the pressure conditions in the pipette channel (38), which is in communication connection with a control unit, not arranged at the pipette head (22), in particular a processor, for the transferring of signals;
preferably further comprising a pipette piston device, forming the pressure generating device, with a piston drive means (40) provided at the pipette head (22), wherein the piston drive means is in communication connection with an encoder, not arranged at the pipette head (22), for determining the position of the piston drive means, wherein the piston drive means is preferably configured as a linear motor (40);
preferably further comprising at least one memory storage element (44a), in particular configured for the buffering of pressure and/or position signals which are detected, wherein the memory storage element is in communication connection with a control unit, not arranged at the pipette head (22); and
preferably further comprising a circuit board (42), to which the pressure sensor (44c) and/or the piston drive means (40) and/or the least one memory storage element (44a) are connected, wherein the circuit board (42) is in communication connection with the control unit not arranged at the pipette head (22).

4. Pipette device, in particular a pipette robot, comprising:
A positioning device (12), which comprises a main frame (14), movable in a first main direction (X), wherein the pipette device (10) can be moved along the main frame (14) in a second main direction (Y);
at least one base carrier (28) and at least one pipette head carrier (30), wherein the base carrier (28) and the pipette head carrier (30) are connected to one another in such a way that, in a state located at the positioning device (12), they can move in common in the first and second main direction (X, Y), and relative to one another in a third main direction (Z) which is orthogonal to the two other main directions;
at least one pipette head (22) according to any one of claims 1 to 3, wherein at least the mechanical coupling means (72a, 72b, 72c) and the at least one electrical coupling means (60a, 60b) of the pipette head (22) can be connected to a respective mechanical or electrical counter-coupling means (70a, 70b, 70c, 62), wherein the respective counter-coupling means (70a, 70b, 70c, 62) is formed at the pipette head carrier (30);
wherein the at least one mechanical coupling means (72a, 72b, 72c) and the respective associated counter-coupling means (70a, 70b, 70c) are configured in such a way that the pipette head (22) can be coupled to the pipette head carrier (30) in a detachable manner and free of play, wherein
the sealing actuation device of the pipette head (22) and a drive means (48), driving the sealing actuation device, interact operationally in such a way that the fluid-tight connection between a pipette tip (24) and the pipette channel (38) can be produced and/or detached after the use of the pipette tip (24), wherein the drive means (48) is arranged at the pipette head carrier (30).

5. Pipette device according to claim 4, wherein the lever-type connecting element (46) and the at least one mechanical coupling means (72a, 72b, 72c) are configured in such a way that the connection between the sealing actuation device and the drive means (48) can be produced by the lever-type connecting element (46), and the connection of the at least one coupling means (72a, 72b, 72c) to the associated counter-coupling means (70a,70b, 70c) can be produced by the fact that the pipette head (22) is coupled to the pipette head carrier (30).

6. Pipette device according to any one of claims 4 or 5, wherein the pipette head carrier (30) comprises a carrier plate (66), which comprises the at least one counter-coupling means (70a, 70b, 70c), wherein preferably the carrier plate (66), in a mounted state of the pipette head carrier (30) at the positioning device (12), is essentially parallel to the plane spanning between the first and third main directions (X, Z), wherein preferably the at least one counter-coupling means (70a, 70b, 70c) is configured as a cut-out opening in the carrier plate (66), preferably as a U-shaped cut-out opening.

7. Pipette device according to any one of claims 4 to 6, wherein the at least one mechanical coupling means (72a, 72b, 72c) is configured as a projection, preferably as a cylindrical projection, wherein preferably the cut-out opening (70a, 70b, 70c) and the projection (72a, 72b, 72c) are configured in such a way that, in at least one main direction (X, Z), a positive-fit connection can be produced between the pipette head (22) and the pipette head carrier (30).

8. Pipette device according to any one of claims 6 or 7, wherein at least one contact element (72c, 74) is provided at the pipette head (22), which, in the mounted state of the pipette head (22), is in contact with the pipette head carrier (30) at the carrier plate (66).

9. Pipette device according to any one of claims 4 to 8, wherein it further comprises locking means (76a, 76b), which are configured such as to secure the mechanical connection between the at least one mechanical coupling means (72a, 72b) and the associated counter-coupling means (70a, 70b), wherein preferably the locking means (76a, 76b) are configured as locking screws.

10. Pipette device according to any one of claims 4 to 9, wherein the at least one electrical coupling means (60a, 60b) is configured as a direct or indirect plug connector of a circuit board (42) associated with the pipette head (22), wherein preferably the electrical coupling means (60a, 60b) is configured as a plug, wherein preferably the at least one electrical counter-coupling piece (62) is configured as a direct or indirect plug connector of a circuit board (64) associated with the pipette head carrier (30), wherein preferably the electrical counter-coupling means (62) is configured as a socket connector.

11. Pipette device according to claim 10, wherein the at least one electrical coupling means (60a, 60b) and the associated counter-coupling means (62) are configured as a direct plug connection, in such a way that the electrical connection can be produced by the fact that the mechanical connection between the pipette head (22) and the pipette head carrier (30) is coupled by means of the at least one mechanical coupling element (72a, 72b, 72c) and the associated mechanical counter-coupling element (70a, 70b, 70c).

12. Pipette device according to any one of claims 4 to 11, wherein the pipette head (22) further comprises at least one buffering element and at least one A/D converter connected to the pressure sensor, which, like the pressure sensor, are preferably connected to the circuit board (42) of the pipette head (22), wherein preferably the pressure generating device is configured as a pipette piston device, with a piston drive means (40) provided at the pipette head (22), wherein preferably the piston drive means is configured as a linear motor (40), which in particular is connected to the circuit board (42) of the pipette head (22).

13. Pipette device according to any one of claims 4 to 12, wherein the pipette head carrier (30) is mounted such as to slide at the base carrier (28), and a carrier drive (32, 34) is provided, which causes a relative movement between the pipette head carrier (30) and the base carrier (28), with a motor (32) located at the base carrier (28), which, by means of a power transfer device, preferably a drive belt (34), causes the sliding movement of the pipette head carrier (30) along the base carrier (28) in the third main direction (Z).

## Revendications

1. Tête de pipetage (22) pour un dispositif de pipetage (10), en particulier un robot de pipetage, comprenant un canal de pipetage (38), auquel une pointe de pipetage (24), en particulier une pointe de pipetage à usage unique, peut être couplée, dans lequel le canal de pipetage (38) comprend un dispositif de production de pression pour produire des variations de pression dans la pointe de pipetage (24) pour aspirer du liquide d'échantillon dans la pointe de pipetage (24) ou en distribuer depuis celle-ci, et
comprenant au moins un moyen de couplage mécanique (72a, 72b, 72c) et au moins un moyen de couplage électrique (60a, 60b) qui sont disposés sur la tête de pipetage (22) et qui sont configurés pour être reliés à un moyen de contre-couplage (70a, 70b, 70c) mécanique ou électrique respectif prévu sur le dispositif de pipetage (10), dans laquelle le au moins un moyen de couplage mécanique (72a, 72b, 72c) et le moyen de contre-couplage (70a, 70b, 70c) associé sont réalisés de manière telle que la tête de pipetage (22) puisse être fixée de manière amovible et sans jeu sur le dispositif de pipetage (10), **caractérisée en ce que**
la tête de pipetage comprend un système d'actionnement d'étanchéité qui est réalisé de telle sorte qu'une liaison étanche aux fluides entre une pointe de pipetage (24) et le canal de pipetage (38) puisse être établie et/ou défaite après utilisation de la pointe de pipetage (24), dans laquelle un moyen d'entraînement (48) pouvant être amené en liaison active ou se trouvant en liaison active avec le système d'actionnement d'étanchéité n'est pas disposé sur la tête de pipetage (22), dans laquelle le système d'actionnement d'étanchéité de la tête de pipetage et le moyen d'entraînement entraînant le système d'actionnement d'étanchéité coopèrent fonctionnellement de manière telle que la liaison étanche aux fluides entre une pointe de pipetage et le canal de pipetage puisse être établie et/ou défaite après utilisation de la pointe de pipetage.

2. Tête de pipetage selon la revendication 1, dans laquelle le système d'actionnement d'étanchéité comprend un élément de liaison (46) de type levier qui peut être amené en liaison de force de manière amovible avec le moyen d'entraînement (48) non disposé sur la tête de pipetage (22).

3. Tête de pipetage selon la revendication 1 ou 2, comprenant en outre un capteur de pression détectant les rapports de pression dans le canal de pipetage (38) qui se trouve en liaison de communication avec une unité de commande non disposée sur la tête de pipetage (22), en particulier un processeur pour la transmission de signaux ;
comprenant par ailleurs de manière préférée un système à piston de pipetage formant le système de production de pression, comprenant un moyen d'entraînement de piston (40) prévu sur la tête de pipetage (22), dans laquelle le moyen d'entraînement de piston se trouve en liaison de communication avec un encodeur non disposé sur la tête de pipetage (22) pour définir la position du moyen d'entraînement de piston, dans laquelle de préférence le moyen d'entraînement de piston est réalisé en tant que moteur linéaire (40) ;
comprenant par ailleurs de manière préférée au moins un élément de stockage (44a), en particulier configuré pour le stockage temporaire de signaux de pression et/ou de position détectés, dans laquelle l'élément de stockage se trouve en liaison de communication avec une unité de commande non disposée sur la tête de pipetage (22) ; et
comprenant par ailleurs de manière préférée une carte de circuits imprimés (42) à laquelle le capteur de pression (44c) et/ou le moyen d'entraînement de piston (40) et/ou le au moins un élément de stockage (44a) sont reliés, dans laquelle la carte de circuits imprimés (42) se trouve en liaison de communication avec l'unité de commande non disposée sur la tête de pipetage (22).

4. Dispositif de pipetage, en particulier robot de pipetage, comprenant :
un dispositif de positionnement (12) qui comprend un cadre principal (14) mobile dans une première direction principale (X), dans lequel le dispositif de pipetage (10) est mobile dans une deuxième direction principale (Y) le long du cadre principal (14) ;
au moins un support de base (28) et au moins un support de tête de pipetage (30), dans lequel le support de base (28) et le support de tête de pipetage (30) sont reliés l'un à l'autre de manière telle que, dans un état installé sur le dispositif de positionnement (12), ils soient mobiles ensemble dans la première et la deuxième direction principale (X, Y) et l'un par rapport à l'autre dans une troisième direction principale (Z), qui est orthogonale aux deux autres directions principales ;
au moins une tête de pipetage (22) selon l'une des revendications 1 à 3, dans lequel
le moyen de couplage mécanique (72a, 72b, 72c) au moins et le au moins un moyen de couplage électrique (60a, 60b) de la tête de pipetage (22) peuvent être reliés à un moyen de contre-couplage (70a, 70b, 70c, 62) respectif mécanique ou électrique, dans lequel le moyen de contre-couplage (70a, 70b, 70c, 62) respectif est réalisé sur le support de tête de pipetage (30) ;
dans lequel le au moins un moyen de couplage mécanique (72a, 72b, 72c) et le moyen de contre-couplage (70a, 70b, 70c) respectivement associé sont réalisés de manière telle que la tête de pipetage (22) puisse être couplée de manière amovible et sans jeu sur le support de tête de pipetage (30), dans lequel
le système d'actionnement d'étanchéité de la tête de pipetage (22) et un moyen d'entraînement (48) entraînant le système d'actionnement d'étanchéité coopèrent fonctionnellement de manière telle que la liaison étanche aux fluides entre une pointe de pipetage (24) et le canal de pipetage (38) puisse être établie et/ou défaite après utilisation de la pointe de pipetage (24), dans lequel le moyen d'entraînement (48) est disposé sur le support de tête de pipetage (30).

5. Dispositif de pipetage selon la revendication 4, dans lequel l'élément de liaison (46) de type levier et le au moins un moyen de couplage mécanique (72a, 72b, 72c) sont réalisés de manière telle que la liaison entre le système d'actionnement d'étanchéité et le moyen d'entraînement (48) par l'élément de liaison (46) de type levier et la liaison du au moins un moyen de couplage (72a, 72b, 72c) au moyen de contre-couplage (70a, 70b, 70c) associé puissent être établies du fait que la tête de pipetage (22) est couplée au support de tête de pipetage (30).

6. Dispositif de pipetage selon l'une des revendications 4 ou 5, dans lequel le support de tête de pipetage (30) comprend une plaque de support (66) qui présente le au moins un moyen de contre-couplage (70a, 70b, 70c), dans lequel de préférence la plaque de support (66) est dans un état monté du support de tête de pipetage (30) sur le dispositif de positionnement (12), sensiblement parallèle à un plan formé par la première et la troisième direction principale (X, Z), dans lequel de préférence le au moins un moyen de contre-couplage (70a, 70b, 70c) est réalisé en tant qu'évidement dans la plaque de support (66), de préférence en tant qu'évidement en forme de U.

7. Dispositif de pipetage selon l'une des revendications 4 à 6, dans lequel le au moins un moyen de couplage mécanique (72a, 72b, 72c) est réalisé en tant que saillie, de préférence en tant que saillie cylindrique, dans lequel de préférence l'évidement (70a, 70b, 70c) et la saillie (72a, 72b, 72c) sont réalisés de manière telle qu'une liaison par complémentarité de forme entre la tête de pipetage (22) et le support de tête de pipetage (30) puisse être établie dans au moins une direction principale (X, Z).

8. Dispositif de pipetage selon l'une des revendications 6 ou 7, dans lequel est prévu sur la tête de pipetage (22) au moins un élément de butée (72c, 74) qui repose sur la plaque de support (66) dans l'état monté de la tête de pipetage (22) sur le support de tête de pipetage (30).

9. Dispositif de pipetage selon l'une des revendications 4 à 8, comprenant en outre des moyens d'arrêt (76a, 76b) qui sont configurés pour verrouiller la liaison mécanique entre le au moins un moyen de couplage mécanique (72a, 72b) et le moyen de contre-couplage (70a, 70b) associé, dans lequel de préférence les moyens d'arrêt (76a, 76b) sont réalisés en tant que vis de blocage.

10. Dispositif de pipetage selon l'une des revendications 4 à 9, dans lequel le au moins un moyen de couplage électrique (60a, 60b) est réalisé en tant que connecteur enfichable direct ou indirect d'une carte de circuits imprimés (42) appartenant à la tête de pipetage (22), dans lequel de préférence le moyen de couplage électrique (60a, 60b) est réalisé en tant que fiche, dans lequel de préférence la au moins une pièce de contre-couplage électrique (62) est réalisée en tant que connecteur enfichable direct ou indirect d'une carte de circuits imprimés (64) appartenant au support de tête de pipetage (30), dans lequel de préférence le moyen de contre-couplage électrique (62) est réalisé en tant que douille.

11. Dispositif de pipetage selon la revendication 10, dans lequel le au moins un moyen de couplage électrique (60a, 60b) et le moyen de contre-couplage (62) associé sont réalisés en tant que liaison enfichable directe de manière telle que la liaison électrique puisse être établie du fait que la liaison mécanique entre la tête de pipetage (22) et le support de tête de pipetage (30) est couplée au moyen du au moins un élément de couplage mécanique (72a, 72b, 72c) et de l'élément de contre-couplage mécanique (70a, 70b, 70c) associé.

12. Dispositif de pipetage selon l'une des revendications 4 à 11, dans lequel la tête de pipetage (22) comprend en outre au moins un élément de stockage et au moins un convertisseur A/N relié au capteur de pression qui sont reliés de préférence tout comme le capteur de pression à la carte de circuits imprimés (42) de la tête de pipetage (22), dans lequel de préférence le système de production de pression est réalisé en tant que système à piston de pipetage comprenant un moyen d'entraînement de piston (40) prévu sur la tête de pipetage (22), dans lequel de préférence le moyen d'entraînement de piston est réalisé en tant que moteur linéaire (40), qui est relié en particulier à la carte de circuits imprimés (42) de la tête de pipetage (22).

13. Dispositif de pipetage selon l'une des revendications 4 à 12, dans lequel le support de tête de pipetage (30) est monté de manière glissante sur le support de base (28) et un entraînement de support (32, 34) entraînant le déplacement relatif entre le support de tête de pipetage (30) et le support de base (28) est prévu avec un moteur (32) installé sur le support de base (28), qui entraîne, au moyen un système de transmission, de préférence une courroie d'entraînement (34), le déplacement par glissement du support de tête de pipetage (30) le long du support de base (28) dans la troisième direction principale (Z).
